# EUROPEAN PATENT APPLICATION

(11) **EP 4 283 397 A1**
(43) Date of publication of application: **29.11.2023**
(21) Application number: 21920301.5
(22) Date of filing: 22.01.2021
(51) Int. Cl.: G03B 21/20, F21S 41/141

(54) **FOCUSING SYSTEM FOR VEHICLE LAMP PROJECTION, AND VEHICLE**

(71) Applicant: Zhejiang Smart Intelligence Technology Co., Ltd., Ningbo, Zhejiang 315336 (CN)
(72) Inventor: FU, Qiang, Hangzhou Bay New District Ningbo, Zhejiang 315336 (CN); HAO, Lixia, Hangzhou Bay New District Ningbo, Zhejiang 315336 (CN); FANG, Mei, Hangzhou Bay New District Ningbo, Zhejiang 315336 (CN); LOU, Longhai, Hangzhou Bay New District Ningbo, Zhejiang 315336 (CN); CHEN, Xiaolei, Hangzhou Bay New District Ningbo, Zhejiang 315336 (CN); SUN, Liqing, Hangzhou Bay New District Ningbo, Zhejiang 315336 (CN); GUO, Yanfeng, Hangzhou Bay New District Ningbo, Zhejiang 315336 (CN); YU, Aiquan, Hangzhou Bay New District Ningbo, Zhejiang 315336 (CN)
(74) Representative: Zaboliene, Reda
(86) International application number: PCT/CN2021/073344
(87) International publication number: WO 2022/155903

(57) **Abstract**

The present application relates to the technical field of automobiles, in particular to a focusing system for vehicle lamp projection, and a vehicle. The focusing system for vehicle lamp projection comprises a projection lamp, a controller and a focusing device. The projection lamp is connected to the focusing device, and the focusing device is electrically connected to the controller. The controller comprises a first information acquisition unit, a processing unit and a focusing control unit. The processing unit is electrically connected to the first information acquisition unit and the focusing control unit, respectively. The first information acquisition unit is used for acquiring parameter information of a vehicle, and sending the parameter information of the vehicle to the processing unit. The processing unit is used for processing the parameter information of the vehicle to obtain focusing data, and sending the focusing data to the focusing control unit. The focusing control unit is used for controlling, according to the focusing data, the focusing device to perform focusing processing on the projection lamp. In the present application, the focusing control unit performs focusing processing on the projection lamp according to the focusing data, so that the projection lamp can achieve a clear projection effect, thereby improving the customer experience.

## Description

### TECHNICAL FIELD

The present application relates to the technical field of automobiles, and in particular, to a focusing system for vehicle lamp projection and a vehicle.

### BACKGROUND

Automotive industry is developing rapidly, and people's economic strength is constantly improving. Pursuits for cars are not only limited to performance, and better riding experience will be an important measure for consumers when purchasing cars.

After recent years of development, car projection lights, as decorative lights, have gradually become the standard configuration for mid to high-end cars. Car welcome projection lights mounted on inner sides of the car doors have become very common in the market, and welcome projection lights mounted on car lights have also gradually emerged. However, a projection angle of an existing welcome projection light is fixed and unchangeable. Multiple different models of the same car series will all use accessories with the same structure, while different models have different mounting heights and will have different projection angles. This will result in that it is difficult for the same type of welcome projection light, when being mounted on different models, to achieve full adaption for angles, use experience of customer is affected, and diverse needs of customers cannot be met. Moreover, existing projection lights cannot meet users' requirement of watching movies clearly, and cannot meet car players' requirement of hoping obtaining better movie viewing experience either.

Based on the shortcomings existing in the prior art, there is an urgent need to research a focusing system of vehicle lamp projection and a vehicle to solve the above problems.

### SUMMARY OF THE DISCLOSURE

In order to solve the above technical problems, the present application provides a focusing system for vehicle lamp projection and a vehicle. In the present application, a first information acquisition unit is configured to acquire parameter information of a vehicle, a processing unit is configured to process the parameter information and obtain focusing data, and a focusing control unit is configured to perform focusing processing for a projection lamp according to the focusing data, so that the projection lamp can achieve clear projection effect, and thus experience of customers is improved.

The present application discloses a focusing system for vehicle lamp projection comprising a projection lamp, a controller, and a focusing device configured to adjust a focal distance of the projection lamp; the projection lamp is connected to the focusing device, and the focusing device is electrically connected to the controller; the controller comprises a first information acquisition unit, a processing unit, and a focusing control unit; the processing unit is electrically connected to the first information acquisition unit and the focusing control unit respectively; the first information acquisition unit is configured to acquire parameter information of a vehicle, and send the parameter information of the vehicle to the processing unit; the processing unit is configured to process the parameter information of the vehicle to obtain focusing data, and send the focusing data to the focusing control unit; the focusing control unit is configured to control the focusing device to perform focusing processing for the projection lamp according to the focusing data; wherein the parameter information comprises an attitude of the vehicle and a distance between the vehicle and a surface to be projected.

Furthermore, the focusing device comprises a first focusing assembly and a first motor configured to drive the first focusing assembly; the first motor is electrically connected to the focusing control unit, and the focusing control unit is configured to control the first motor to drive the first focusing assembly according to the focusing data.

Furthermore, a second focusing assembly and a knob assembly connected to each other are further included; an end of the second focusing assembly is connected to the first focusing assembly, the second focusing assembly and the first focusing assembly are driven sequentially through the knob assembly to perform focusing processing for the projection lamp.

Furthermore, the second focusing assembly comprises a first focusing element and a second focusing element; the knob assembly comprises a first focusing knob and a second focusing knob; an end of the first focusing element is connected to the first focusing knob, and another end of the first focusing element is connected to the first focusing assembly; an end of the second focusing element is connected to the second focusing knob, and another end of the second focusing element is connected to the first focusing assembly.

Furthermore, a second motor is further included; the second motor is connected to the projection lamp, and the second motor is configured to drive the projection lamp to rotate.

Furthermore, the controller further comprises a second information acquisition unit and a motor control unit, the second information acquisition unit is electrically connected to the projection lamp and the processing unit respectively, and the processing unit is electrically connected to the motor control unit; the second information acquisition unit is configured to acquire played data and state data of the projection lamp and send the played data and the state data of the projection lamp to the processing unit; the processing unit is configured to process the state data of the projection lamp to obtain angle data and send the angle data to the motor control unit; the motor control unit controls the second motor to drive the projection lamp to rotate.

Furthermore, the second information acquisition unit comprises a Bluetooth module, a WIFI module, an internet module, and a distance sensor; the Bluetooth module, the WIFI module, the internet module, and the distance sensor are all electrically connected to the processing unit; the processing unit acquires the played data through the Bluetooth module, the WIFI module, and the internet module, wherein the played data are images or video signals; and the processing unit acquires a projection distance between the projection lamp and a surface to be projected through the distance sensor.

Furthermore, a speed detection unit is further included; the speed detection unit is electrically connected to the processing unit; the speed detection unit is configured to detect a speed of a vehicle, and when the speed of the vehicle is not less than a preset speed value, send a first closing signal to the processing unit.

Furthermore, a power supply unit is further included, the power supply unit supplies power to the first motor, the second motor, and the projection lamp.

Furthermore, an electricity detection unit is further included; the electricity detection unit is electrically connected to the processing unit; the electricity detection unit is configured to detect remained electricity of a power supply unit of a vehicle, and when the remained electricity of the vehicle is not less than a preset electricity value, send a second closing signal to the processing unit.

Furthermore, the projection lamp is electrically connected to the power supply unit; when the processing unit receives the second closing signal, the power supply unit is disconnected from the projection lamp.

Furthermore, a memory unit is further included; the memory unit is electrically connected to the processing unit and the focusing unit respectively, and the memory unit is configured to store the focusing data and send the focusing data to the processing unit.

The present application further protects a vehicle comprising the aforementioned focusing system for vehicle lamp projection.

Implementation of embodiments of the present application has the following advantageous effect: 1. in the present application, the first information acquisition unit is configured to acquire parameter information of a vehicle, the processing unit is configured to process the parameter information and acquire focusing data, and the focusing control unit performs focusing process for the projection lamp according to the focusing data, so that the projection lamp can achieve clear projection effect, and thus customers' experience is improved. 2. in the present application, it is possible to control the first motor to rotate through the focusing control unit, and thus drive the first focusing assembly to perform focusing processing for the projection lamp; and it is also possible to drive the first focusing assembly to perform focusing processing for the projection lamp through the knob assembly and the second focusing assembly, thereby achieving integration of manually focusing and automatically focusing and meeting use requirements of different users.

### BRIEF DESCRIPTION OF THE DRAWINGS

In order to explain technical solutions of the present application more clearly, drawings required to be used in description of embodiments or of the prior art will be briefly introduced below. It is obvious that the drawings in the following description are only some embodiments of the present application. For those skilled in the art, other drawings can be obtained according to these drawings without paying creative work.
FIG. 1 is a structural diagram of a focusing system for vehicle lamp projection of an embodiment.
FIG. 2 is a structural diagram of a controller of an embodiment.
FIG. 3 is a structural diagram of a controller of another embodiment.
FIG. 4 is a structural diagram of a second information acquisition unit of an embodiment.
FIG. 5 is a schematic view of projection by a vehicle of an embodiment.

Among them, the figure reference numbers in the drawings are in correspondence with the following: 1-projection lamp; 2-controller; 3-focusing device; 21-first information acquisition unit; 22-processing unit; 23-focusing control unit; 24-second information acquisition unit; 25-motor control unit; 26-speed detection unit; 27-power supply unit; 28-electricity detection unit; 29-memory unit; 241-Bluetooth module; 242-WIFI module; 243-internet module; 244-distance sensor.

### DETAILED DESCRIPTION

The technical solutions in the embodiments of the present application will be described clearly and completely below in combination with the drawings in the embodiments of the present application. Obviously, the described embodiments are merely some embodiments of the present application, rather than all embodiments. Based on the embodiments of the present application, any other embodiment obtained by one of ordinary skill in the art on the premise of paying no creative work belongs to the protection scope of the present application.

It should be noted that the terms "first", "second", and the like in the description and claims of the present application, as well as the accompanying drawings, are used to distinguish similar objects and do not need to be used to describe a specific order or sequence. It should be understood that data used in this way may be interchanged in appropriate cases, so that embodiments of the present application described here can be implemented in orders other than those illustrated or described here. In addition, the terms "include" and "have", as well as any variations thereof, are intended to cover non-exclusive inclusion. For example, a process, method, system, product, or device that includes a series of steps or units need not be limited to those clearly listed steps or units, but may include other steps or units that are not clearly listed or inherent to these processes, methods, products, or devices.

The prior art has the following defect: a projection angle of an existing welcome projection light is fixed and unchangeable; multiple different models of the same car series will all use accessories with the same structure, while different models have different mounting heights and will have different projection angles. This will result in that it is difficult for the same type of welcome projection light, when being mounted on different models, to achieve full adaption for angles, use experience of customer is affected, and diverse needs of customers cannot be met. Moreover, existing projection lights cannot meet users' requirement of watching movies clearly, and cannot meet car players' requirement of hoping obtaining better movie viewing experience either.

Aiming at the defect of the prior art, in the present application, the first information acquisition unit is configured to acquire parameter information of a vehicle, the processing unit is configured to process the parameter information and acquire focusing data, and the focusing control unit performs focusing process for the projection lamp according to the focusing data, so that the projection lamp can achieve clear projection effect, and thus customers' experience is improved; furthermore, in the present application, it is possible to control the first motor to rotate through the focusing control unit, and thus drive the first focusing assembly to perform focusing processing for the projection lamp; and it is also possible to drive the first focusing assembly to perform focusing processing for the projection lamp through the knob assembly and the second focusing assembly, thereby achieving integration of manually focusing and automatically focusing and meeting use requirements of different users.

### Embodiment 1

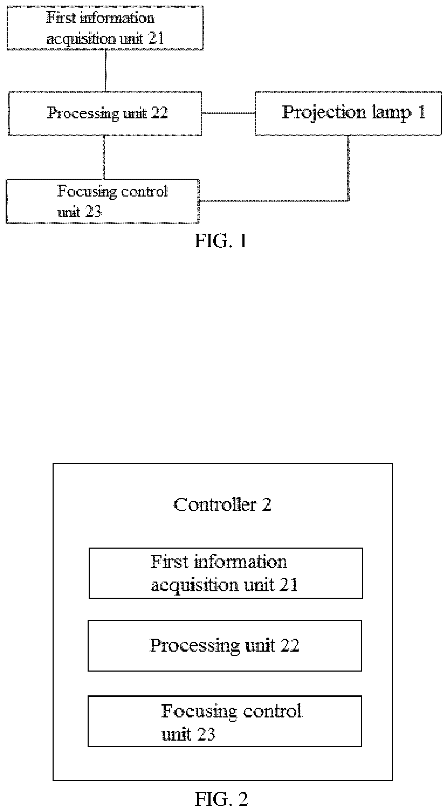

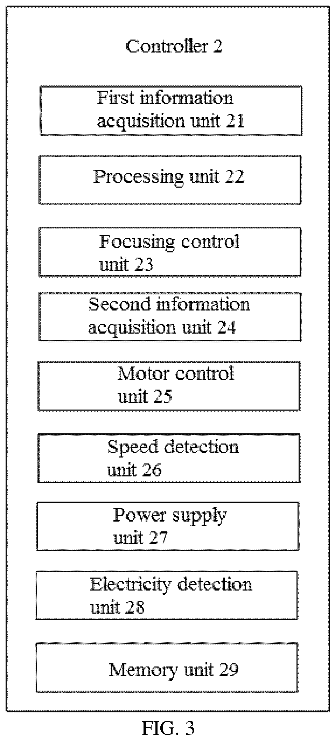

Referring to FIG. 1 to FIG. 5, this embodiment provides a focusing system for vehicle lamp projection, which includes a projection lamp 1, a controller 2, and a focusing device 3 configured to adjust a focal distance of the projection lamp 1; the projection lamp 1 is connected to the focusing device 3, and the focusing device 3 is electrically connected to the controller 2; the controller 2 includes a first information acquisition unit 21, a processing unit 22, and a focusing control unit 23; the processing unit 22 is electrically connected to the first information acquisition unit 21 and the focusing control unit 23 respectively; the first information acquisition unit 21 is configured to acquire parameter information of a vehicle, and send the parameter information of the vehicle to the processing unit 22; the processing unit 22 is configured to process the parameter information of the vehicle to obtain focusing data, and send the focusing data to the focusing control unit 23; the focusing control unit 23 is configured to control the focusing device 3 to perform focusing processing for the projection lamp 1 according to the focusing data; wherein the parameter information comprises an attitude of the vehicle and a distance between the vehicle and a surface to be projected.

It should be noted that in this embodiment, the first information acquisition unit 21 is configured to acquire parameter information of a vehicle, the processing unit 22 is configured to process the parameter information and acquire focusing data, and the focusing control unit 23 performs focusing process for the projection lamp 1 according to the focusing data, so that the projection lamp 1 can achieve clear projection effect, and thus customers' experience is improved.

It should be further noted that the projection lamp 1 is provided in a front headlight of a vehicle or arranged as a separate module.

In some possible embodiments, the projection lamp 1 is arranged on a front grid of a vehicle.

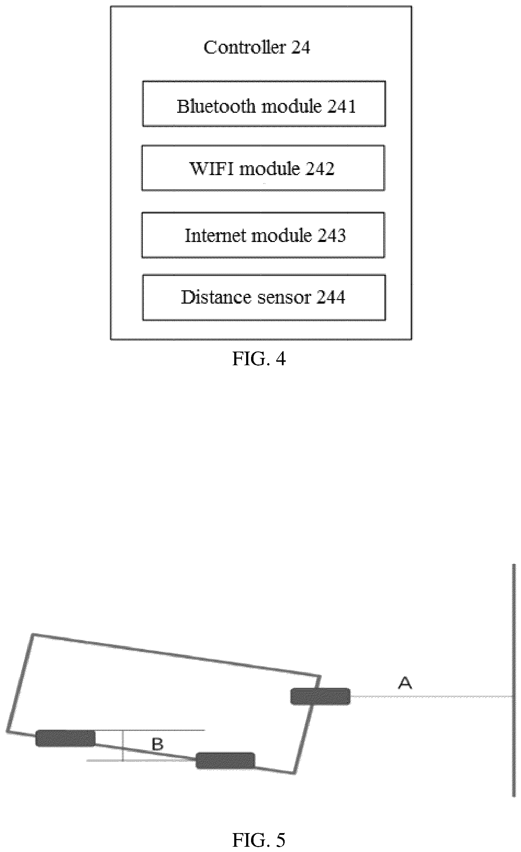

In some possible embodiments, the first information acquisition unit 21 includes an altitude difference sensor and a radar; the height difference sensor is configured to obtain a height difference between front and rear of the vehicle, thereby obtaining the attitude of the vehicle; the radar is configured to obtain the distance between the vehicle and the surface to be projected; wherein B in FIG. 5 represents the height difference between the front and the rear of the vehicle, and A in FIG. 5 represents the distance between the vehicle and the surface to be projected.

Preferably, the focusing device 3 includes a first focusing assembly and a first motor configured to drive the first focusing assembly; the first motor is electrically connected to the focusing control unit 23, and the focusing control unit 23 is configured to control the first motor to drive the first focusing assembly according to the focusing data.

Preferably, a second focusing assembly and a knob assembly connected to each other are further included; an end of the second focusing assembly is connected to the first focusing assembly, and the second focusing assembly and the first focusing assembly are driven sequentially through the knob assembly to perform focusing processing for the projection lamp 1.

In this embodiment, that the focusing control unit 23 controls the first motor to rotate and thereby drive the first focusing assembly to perform focusing processing for the projection lamp 1 is defined as automatically focusing; and that the first focusing assembly is driven to perform focusing processing for the projection lamp 1 through the knob assembly and the second focusing assembly is defined as manually focusing.

In some possible embodiments, the internal of the vehicle is provided with a focusing button, the focusing button is electrically connected to the focusing control unit 23. When a driver or passenger press the focusing button, the automatically focusing can be activated to perform focusing processing for the projection light 1.

In the present application, it is possible to control the first motor to rotate through the focusing control unit 23, and thus drive the first focusing assembly to perform focusing processing for the projection lamp 1; and it is also possible to drive the first focusing assembly to perform focusing processing for the projection lamp 1 through the knob assembly and the second focusing assembly, thereby achieving integration of manually focusing and automatically focusing and meeting use requirements of different users.

Preferably, the second focusing assembly comprises a first focusing element and a second focusing element; the knob assembly comprises a first focusing knob and a second focusing knob; an end of the first focusing element is connected to the first focusing knob, and another end of the first focusing element is connected to the first focusing assembly; an end of the second focusing element is connected to the second focusing knob, and another end of the second focusing element is connected to the first focusing assembly.

In this embodiment, a process of the manually focusing is as follows: a driver or passenger adjusts the first focusing knob according to a visual distance to coarsely adjust the focal distance of the projection lamp 1, and adjusts it to be clearer (≥ 10mm)/M (5m~10m)/N (≤5m) at this time; furthermore, adjusts a projection height of the projection lamp 1 according to s vehicle situation, and then adjusts the second focusing knob to finely adjust the focal distance of the projection lamp.

In some possible embodiments, the first focusing knob is defined as a coarsely adjusting knob, and the second focusing knob is defined as a finely adjusting knob.

In this embodiment, a driver or passenger can press the focusing button to select automatically focusing, and can also rotate the knob assembly to select manually focusing. When a driver or passenger selects manually focusing, the first focusing knob is firstly rotated to make coarse adjustment to the projection lamp 1, and then the second focusing knob is rotated to make fine adjustment to the projection lamp 1.

In some possible embodiments, both the first focusing element and the second focusing element can be screw structures, and the screw structures are driven by the knob component to perform focusing processing for the projection lamp 1.

Preferably, the focusing system for vehicle lamp projection further includes a second motor, the second motor is connected to the projection lamp 1, and the second motor is configured to drive the projection lamp to rotate.

In some possible embodiments, the focusing system for vehicle lamp projection further includes a fixing bracket, the projection lamp 1 and the focusing device 3 are fixedly arranged on the fixing bracket, the second motor can drive the fixing bracket to rotate, and the projection lamp 1 can rotate along with the fixing bracket at the same time, thereby achieving adjustment for a projection angle of the projection lamp 1, such that it can project on a ground or a wall surface.

Preferably, the controller 2 further includes a second information acquisition unit 24 and a motor control unit 25, the second information acquisition unit 24 is electrically connected to the projection lamp 1 and the processing unit 22 respectively, and the processing unit 22 is electrically connected to the motor control unit 25; the second information acquisition unit 24 is configured to acquire played data and state data of the projection lamp 1 and send the played data and the state data of the projection lamp 1 to the processing unit 22; the processing unit 22 is configured to process the state data of the projection lamp 1 to obtain angle data and send the angle data to the motor control unit 25; the motor control unit 25 controls the second motor to drive the projection lamp 1 to rotate.

Preferably, the second information acquisition unit 24 includes a Bluetooth module 241, a WIFI module 242, an internet module 243, and a distance sensor 244; the Bluetooth module 241, the WIFI module 242, the internet module 243, and the distance sensor 244 are all electrically connected to the processing unit 22; the processing unit 22 acquires the played data through the Bluetooth module 241, the WIFI module 242, and the internet module 243, wherein the played data are images or video signals; and the processing unit 22 acquires a projection distance between the projection lamp 1 and a surface to be projected through the distance sensor 244.

The processing unit 22 acquires a projection distance between the projection lamp 1 and a surface to be projected through the distance sensor 244, and transmit played data by providing the Bluetooth module 241, the WIFI module 242, the internet module 243, such that the played data can be transmitted at a high speed by above modules, thereby transmitting the played data in real time/dynamically.

Specifically, the distance sensor 244 is configured to acquire a projection distance between the projection lamp 1 and a surface to be projected, and send the projection distance to the processing unit 22.

In some possible embodiments, the distance sensor is a radar or an electronic map.

Preferably, the focusing system for vehicle lamp projection further includes a speed detection unit 26; the speed detection unit 26 is electrically connected to the processing unit 22; the speed detection unit 26 is configured to detect a speed of a vehicle, and when the speed of the vehicle is not less than a preset speed value, send a first closing signal to the processing unit 22.

In some possible embodiments, when the speed detection unit 26 detects that a speed of a vehicle is not less than a preset speed value, it determines that the vehicle is driving at a high speed, and sends a first closing signal to the processing unit 22 at this time; the processing unit 22 controls the projection function of the projection lamp 1 to be closed.

Preferably, the focusing system for vehicle lamp projection further includes a power supply unit 27, the power supply unit 27 supplies power to the first motor, the second motor, and the projection lamp 1.

Specifically, the power supply unit 27 includes a battery, the battery supplies power to the first motor, the second motor, the third motor, and the projection lamp 1 respectively.

Preferably, the focusing system for vehicle lamp structure further includes an electricity detection unit 228; the electricity detection unit 28 is electrically connected to the processing unit 22; the electricity detection unit 28 is configured to detect remained electricity of a power supply unit 27 of a vehicle, and when the remained electricity of the vehicle is not less than a preset electricity value, send a second closing signal to the processing unit 22.

In some possible embodiments, when the electricity detection unit 28 detects that a speed of a vehicle is not less than a preset electricity value, it determines that the electricity of the vehicle is low and insufficient to support playing, and then sends a second closing signal to the processing unit 22 at this time; the processing unit 22 controls the projection function of the projection lamp 1 to be closed.

In some possible embodiment, the controller 2 further includes a calculation unit, the calculation unit is electrically connected to the electricity detection unit 28, the processing unit 22, and the second information acquisition unit 24 respectively; the calculation unit is configured to acquire a video time length when playing a video and calculate consumed electricity; the consumed electricity is compared with remained electricity of a vehicle, and when the consumed electricity is larger than the remained electricity, the second closing signal is sent to the processing unit 22.

Preferably, the projection lamp 1 is electrically connected to the power supply unit 27, when the processing unit 22 receives the second closing signal, the power supply unit 27 is disconnected from the projection lamp 1.

Preferably, the focusing system for vehicle lamp projection further includes a memory unit 29; the memory unit 29 is electrically connected to the processing unit 22 and the focusing unit respectively, and the memory unit 29 is configured to store the focusing data and send the focusing data to the processing unit 22.

In some possible embodiments, the memory unit 29 is configured to store previous focusing data of a user, and send the focusing data to the processing unit 22; the processing unit 22 can perform focusing for the projection lamp 1 based on the focusing data, such that it can achieve a proper focal distance rapidly and facilitate users' watching.

In some possible embodiments, the memory unit 29 can also store users' favorite images or videos; the memory unit 29 can send the images or videos to the processing unit 22, and they are projected by the projection lamp 1.

A focusing process of the focusing system for vehicle lamp projection is that: parameter information of a vehicle is acquired by the first information acquisition unit 21, and the parameter information of the vehicle is sent to the processing unit 22; the processing unit 22 processes the parameter information of the vehicle to obtain focusing data, and sends the focusing data to the focusing control unit 23; the focusing control unit 23 controls the focusing device 3 to perform focusing processing for the projection lamp 1 based on the focusing data.

The present application further protects a vehicle comprising the aforementioned focusing system for vehicle lamp projection.

Although the present application has been described through preferred embodiments, the present application is not limited to the embodiments described herein and further includes various changes and variations made without departing from the scope of the present application.

In this specification, related directional words "front", "back", "up", "down", and so on are defined based on positions of components in the figures and between the components, and are just for clarity and convenience of expressing the technical solution. It should be understood that use of the directional words should not limit the protection scope requested by the present application.

In this specification, the above embodiments and the features in the embodiments can be combined with each other in the condition of no conflict.

The above disclosure is only a preferred embodiment of the present application, and of course, it should not be used to limit the scope of claims of the present application. Therefore, any equivalent change made according to the claims of the present application still fall within the scope covered by the present application.

## Claims

1. A focusing system for vehicle lamp projection comprising a projection lamp (1), a controller (2), and a focusing device (3) configured to adjust a focal distance of the projection lamp (1); wherein the projection lamp (1) is connected to the focusing device (3), and the focusing device (3) is electrically connected to the controller (2); the controller (2) comprises a first information acquisition unit (21), a processing unit (22), and a focusing control unit (23); the processing unit (22) is electrically connected to the first information acquisition unit (21) and the focusing control unit (23) respectively; the first information acquisition unit (21) is configured to acquire parameter information of a vehicle, and send the parameter information of the vehicle to the processing unit (22); the processing unit (22) is configured to process the parameter information of the vehicle to obtain focusing data, and send the focusing data to the focusing control unit (23); the focusing control unit (23) is configured to control the focusing device (3) to perform focusing processing for the projection lamp (1) according to the focusing data; wherein the parameter information comprises an attitude of the vehicle and a distance between the vehicle and a surface to be projected.

2. The focusing system for vehicle lamp projection according to claim 1, wherein the focusing device (3) comprises a first focusing assembly and a first motor configured to drive the first focusing assembly; the first motor is electrically connected to the focusing control unit (23), and the focusing control unit (23) is configured to control the first motor to drive the first focusing assembly according to the focusing data.

3. The focusing system for vehicle lamp projection according to claim 2, further comprising a second focusing assembly and a knob assembly connected to each other; wherein an end of the second focusing assembly is connected to the first focusing assembly, the second focusing assembly and the first focusing assembly are driven sequentially through the knob assembly to perform focusing processing for the projection lamp (1).

4. The focusing system for vehicle lamp projection according to claim 3, wherein the second focusing assembly comprises a first focusing element and a second focusing element; the knob assembly comprises a first focusing knob and a second focusing knob; an end of the first focusing element is connected to the first focusing knob, and another end of the first focusing element is connected to the first focusing assembly; an end of the second focusing element is connected to the second focusing knob, and another end of the second focusing element is connected to the first focusing assembly.

5. The focusing system for vehicle lamp projection according to claim 3, further comprising a second motor; wherein the second motor is connected to the projection lamp (1), and the second motor is configured to drive the projection lamp (1) to rotate.

6. The focusing system for vehicle lamp projection according to claim 5, wherein the controller (2) further comprises a second information acquisition unit (24) and a motor control unit (25), the second information acquisition unit (24) is electrically connected to the projection lamp (1) and the processing unit (22) respectively, and the processing unit (22) is electrically connected to the motor control unit (25); the second information acquisition unit (24) is configured to acquire played data and state data of the projection lamp (1) and send the played data and the state data of the projection lamp (1) to the processing unit (22); the processing unit (22) is configured to process the state data of the projection lamp (1) to obtain angle data and send the angle data to the motor control unit (25); the motor control unit (25) controls the second motor to drive the projection lamp (1) to rotate.

7. The focusing system for vehicle lamp projection according to claim 6, wherein the second information acquisition unit (24) comprises a Bluetooth module (241), a WIFI module (242), an internet module (243), and a distance sensor (244); the Bluetooth module (241), the WIFI module (242), the internet module (243), and the distance sensor (244) are all electrically connected to the processing unit (22); the processing unit (22) acquires the played data through the Bluetooth module (241), the WIFI module (242), and the internet module (243), wherein the played data are images or video signals; and the processing unit (22) acquires a projection distance between the projection lamp (1) and a surface to be projected through the distance sensor (244).

8. The focusing system for vehicle lamp projection according to claim 1, further comprising a speed detection unit (26); wherein the speed detection unit (26) is electrically connected to the processing unit (22); the speed detection unit (26) is configured to detect a speed of a vehicle, and when the speed of the vehicle is not less than a preset speed value, send a first closing signal to the processing unit (22).

9. The focusing system for vehicle lamp projection according to claim 5, further comprising a power supply unit (27), wherein the power supply unit (27) supplies power to the first motor, the second motor, and the projection lamp (1).

10. The focusing system for vehicle lamp projection according to claim 9, further comprising an electricity detection unit (28); wherein the electricity detection unit (28) is electrically connected to the processing unit (22); the electricity detection unit (28) is configured to detect remained electricity of a power supply unit (27) of a vehicle, and when the remained electricity of the vehicle is not less than a preset electricity value, send a second closing signal to the processing unit (22).

11. The focusing system for vehicle lamp projection according to claim 10, wherein the projection lamp (1) is electrically connected to the power supply unit (27); when the processing unit (22) receives the second closing signal, the power supply unit (27) is disconnected from the projection lamp (1).

12. The focusing system for vehicle lamp projection according to claim 1, further comprising a memory unit (29); wherein the memory unit (29) is electrically connected to the processing unit (22) and the focusing unit respectively, and the memory unit (29) is configured to store the focusing data and send the focusing data to the processing unit (22).

13. A vehicle comprising the focusing system for vehicle lamp projection according to any one of claims 1-12.
